# DEMANDE DE BREVET EUROPEEN

(11) **EP 4 360 984 A1**
(43) Date de publication de la demande: **01.05.2024**
(21) Numéro de dépôt: 23205708.3
(22) Date de dépôt: 25.10.2023
(51) Int. Cl.: B61D 17/02, B60J 5/04, E05D 15/44

(54) **VÉHICULE À PANNEAU MOBILE D'ACCÈS À UNE ZONE SOUS CHÂSSIS**

(30) Priorité: 25.10.2022 FR 2211080
(71) Demandeur: ALSTOM Holdings, 93400 Saint-Ouen-sur-Seine (FR)
(72) Inventeur: CRESPEL, Jean-Noël, 17440 AYTRE (FR)
(74) Mandataire: Lavoix

(57) **Abrégé**

Le véhicule comprend un châssis, une zone sous châssis dans laquelle sont logés des organes fonctionnels du véhicule, une caisse (9) présentant une ouverture d'accès à la zone sous châssis, un panneau mobile (17) et une chaîne cinématique agencée pour déplacer sélectivement le panneau mobile (17) par rapport à la caisse (9) entre une position d'obturation de l'ouverture et une position de dégagement de l'ouverture.

La chaîne cinématique (19) comprend :
- une biellette (23) ;
- une liaison rotative biellette-caisse ;
- une liaison rotative biellette-panneau (27) ;
- un guidage (29), le guidage comprenant un rail lié à l'un de la caisse (9) ou du panneau (17) et un chariot lié par une liaison rotative chariot-panneau à l'autre de la caisse (9) ou du panneau (17), le chariot étant déplaçable le long du rail.

## Description

La présente invention concerne en général les véhicules ayant une zone sous châssis dans laquelle sont logés des organes fonctionnels sur lesquels il est nécessaire d'intervenir périodiquement, notamment pour la maintenance de ces organes.

Un tel véhicule peut comprendre un châssis, une zone sous châssis dans laquelle sont logés des organes fonctionnels du véhicule, une caisse présentant une ouverture d'accès à la zone sous châssis, un panneau mobile et une chaine cinématique agencée pour déplacer sélectivement le panneau mobile par rapport à la caisse entre une position d'obturation de l'ouverture et une position de dégagement de l'ouverture.

Dans un véhicule ferroviaire de ce type, par exemple dans un tramway, il est possible de prévoir que le panneau est monté pivotant sur la caisse par l'intermédiaire d'axes de rotation horizontaux situés en partie haute du panneau. Le panneau, également appelé jupe pour un tel tramway, s'étend dans un plan vertical en position d'obturation, et dans un plan sensiblement horizontal dans sa position de dégagement. Le panneau est maintenu dans sa position de dégagement par l'intermédiaire d'une béquille. Le panneau est déplacé manuellement par un opérateur entre sa position de dégagement et sa position d'obturation.

Le panneau en position de dégagement est situé à une hauteur de 800 ou 900 millimètres environ, en fonction des modèles de tramway. Dans un tel véhicule, l'accès aux équipements à maintenir n'est pas commode pour les opérateurs. Ceux-ci doivent travailler accroupis, ou penchés, du fait que le panneau les empêche de se tenir debout à proximité de l'ouverture de la zone sous châssis. Par ailleurs, il existe un risque que les opérateurs de maintenance se cognent contre le panneau.

Dans ce contexte, l'invention vise à proposer un véhicule dans lequel l'accès à la zone sous châssis est facilité.

À cette fin, l'invention porte sur un véhicule comprenant un châssis, une zone sous châssis dans laquelle sont logés des organes fonctionnels du véhicule, une caisse présentant une ouverture d'accès à la zone sous châssis, un panneau mobile et une chaîne cinématique agencée pour déplacer sélectivement le panneau mobile par rapport à la caisse entre une position d'obturation de l'ouverture et une position de dégagement de l'ouverture, la chaîne cinématique comprenant :
- une biellette ;
- une liaison rotative biellette-caisse, liant la biellette à la caisse ;
- une liaison rotative biellette-panneau, liant la biellette au panneau mobile ;
- un guidage, le guidage comprenant un rail lié à l'un de la caisse ou du panneau et un chariot lié par une liaison rotative chariot-panneau à l'autre de la caisse ou du panneau, le chariot étant déplaçable le long du rail.

La chaine cinématique est conçue pour permettre de ranger le panneau, en position de dégagement, dans une position qui ne gêne pas les opérateurs intervenant sur les organes fonctionnels du véhicule.

Notamment, l'utilisation d'une biellette permet de déplacer le panneau en conservant une orientation générale parallèle à l'ouverture. Le rail permet d'assurer un guidage du panneau et en particulier de contrôler son orientation autour de la liaison rotative biellette-panneau.

Le véhicule peut en outre présenter une ou plusieurs des caractéristiques ci-dessous, considérées individuellement ou selon toutes les combinaisons techniquement possibles :
- le rail est agencé pour guider une portion de guidage du panneau, lors du déplacement du panneau de sa position d'obturation jusqu'à sa position de dégagement, selon une trajectoire comprenant d'abord un mouvement d'écartement par rapport à la caisse, puis un mouvement sensiblement parallèle à l'ouverture ;
- le rail est fixé à la caisse, le chariot étant monté sur la portion de guidage du panneau ;
- le panneau se déplace entre sa position d'obturation et sa position de dégagement selon un mouvement de direction générale verticale, la portion de guidage étant située en bas du panneau ;
- le rail est d'orientation générale verticale et comprend une partie inférieure arquée et une partie supérieure rectiligne sensiblement parallèle à l'ouverture ;
- la chaîne cinématique comprend un actionneur linéaire, avec une extrémité proximale liée à la caisse par une liaison rotative actionneur-caisse et une extrémité distale déplaçable par rapport à l'extrémité proximale selon une direction d'extension, l'extrémité distale étant liée à la biellette par une liaison rotative actionneur-biellette ;
- l'actionneur linéaire est configuré pour, en position d'obturation du panneau, solliciter la biellette en rotation autour de la liaison rotative biellette-caisse dans le sens d'un maintien du panneau dans sa position d'obturation ;
- l'actionneur linéaire est configuré pour, à partir d'une position intermédiaire du panneau et jusqu'à la position de dégagement, solliciter la biellette en rotation autour de la liaison rotative biellette-caisse dans le sens d'un déplacement du panneau vers sa position de dégagement ;
- l'actionneur linéaire est un vérin pneumatique, ou un vérin à ressort ou un vérin électrique ;
- la chaîne cinématique comprend une butée de dégagement contre laquelle la biellette vient en appui en position de dégagement du panneau, et de préférence comprend une butée d'obturation contre laquelle la biellette vient en appui en position d'obturation du panneau.

D'autres caractéristiques et avantages de l'invention ressortiront de la description détaillée qui en est donnée ci-dessous, à titre indicatif et nullement limitatif, en référence aux figures annexées, parmi lesquelles :
- La figure 1 est une vue en élévation, de côté, d'une partie d'un véhicule selon l'invention ;
- Les figures 2 et 3 sont des représentations schématiques, en section, des organes de la chaine cinématique lorsque le panneau est en position d'obturation, les sections étant prises selon l'incidence des flèches respectivement Il et III de la figure 1 ;
- Les figures 4 et 5 sont des vues similaires à celles des figures 2 et 3, immédiatement après que le panneau ait quitté la position d'obturation ;
- Les figures 6 et 7 sont des vues similaires à celles des figures 2 et 3, montrant les organes de la chaine cinématique dans une position du panneau intermédiaire entre la position d'obturation et la position de dégagement ; et
- Les figures 8 et 9 sont des vues similaires à celles des figures 2 et 3, montrant les organes de la chaine cinématique quand le panneau est en position de dégagement.

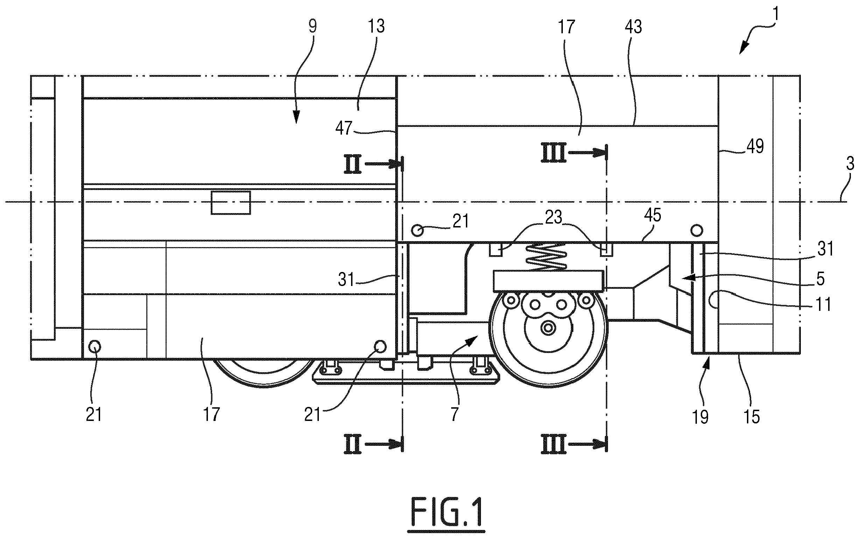

Le véhicule représenté partiellement sur la figure 1 est un véhicule ferroviaire 1. Dans l'exemple représenté, ce véhicule est un tramway.

En variante, le véhicule est un tram-train, ou un train.

Ce véhicule comprend un châssis 3, matérialisé de manière schématique par une ligne interrompue sur la figure 1.

Le véhicule 1 comporte une zone sous châssis 5, dans laquelle sont logés des organes fonctionnels 7 du véhicule.

La zone sous châssis 5 est située sous le châssis 3.

Les organes fonctionnels 5 logés dans la zone sous châssis 5 sont ici le bogie, la suspension secondaire de ce bogie, des boitiers de raccordement à des circuits électriques ou hydrauliques, etc. Ces organes nécessitent une maintenance périodique, préventive ou curative.

Le véhicule comporte encore une caisse 9 présentant une ouverture 11 d'accès à la zone sous châssis 5.

La caisse 9 délimite extérieurement le véhicule 1. La caisse 9 présente notamment deux parois latérales opposées 13, l'ouverture 11 étant ménagée dans l'une de ces parois latérales 13. Les parois latérales 13 sont d'orientation générale verticale et longitudinale. Elles délimitent le véhicule transversalement vers la gauche et vers la droite.

Dans la présente description, la direction longitudinale correspond à la direction de déplacement normale du véhicule. La direction verticale est perpendiculaire à la surface de support du véhicule. La direction transversale est perpendiculaire à la fois à la direction longitudinale et à la direction verticale. L'avant et l'arrière sont entendus ici relativement à la direction longitudinale. Le haut et le bas, les côtés supérieur et inférieur, sont entendus relativement à la direction verticale. La gauche et la droite sont définies relativement à la direction transversale.

La paroi latérale 13 est délimitée vers le bas par un bord inférieur 15 légèrement rentrant sous le châssis du véhicule.

Le véhicule comprend un panneau mobile 17 et une chaine cinématique 19 agencée pour déplacer sélectivement le panneau mobile 17 par rapport à la caisse 9 entre une position d'obturation de l'ouverture 11 et une position de dégagement de l'ouverture 11.

Dans l'exemple représenté, la caisse 9 présente deux ouvertures 11 juxtaposées, chacune donnant accès à la moitié de la zone sous châssis 5. Le véhicule comporte également deux panneaux mobiles 17, ayant chacun sa chaine cinématique 19, chaque panneau mobile 17 étant prévu pour l'obturation ou le dégagement d'une des deux ouvertures 11.

Les ouvertures 11 sont de grandes tailles, et sont conçues pour qu'un opérateur de maintenance ait accès à sensiblement la totalité de la zone sous châssis 5, et en tout état de cause à tous les organes fonctionnels nécessitant une maintenance périodique.

Les deux panneaux mobiles et les deux chaines cinématiques sont identiques, seul l'un des deux panneaux et l'une des deux chaines cinématiques étant décrits ci-dessous.

Dans l'exemple représenté, le panneau 17 est rectangulaire, et l'ouverture 11 est également rectangulaire.

L'ouverture 11 est fermée à ses deux extrémités longitudinales opposées, et également verticalement vers le haut. Elle s'étend verticalement vers le bas jusqu'au bord inférieur 15, et est ouverte au niveau du bord inférieur 15 de la caisse.

Dans la position d'obturation, le panneau 17 obture entièrement l'ouverture 11.

Le véhicule comporte par ailleurs des verrous 21, configurés pour verrouiller le panneau 17 dans sa position d'obturation.

Ces verrous 21 sont des verrous quart de tour à compression, de type connu. Ils sont déplacés entre une position de verrouillage du panneau et une position de libération du panneau à l'aide d'une clé manuelle, par exemple une clé triangulaire.

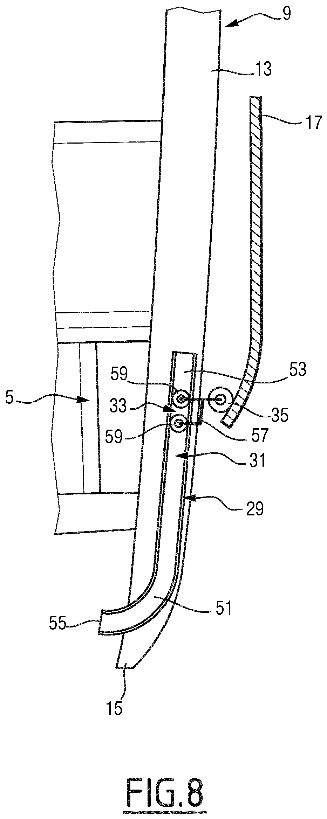

La position de dégagement du panneau 17 est représentée sur les figures 1, 8 et 9.

Dans cette position, le panneau 17 dégage entièrement l'ouverture 11.

Le panneau 17 est situé au-dessus de l'ouverture 11. Il est rangé le long de la paroi latérale 13 de la caisse. Il s'étend dans une orientation sensiblement verticale et longitudinale.

Il est situé parallèlement à la paroi latérale 13 et à faible distance de la paroi latérale 13.

La chaine cinématique 19 comprend :
- une biellette 23 ;
- une liaison rotative biellette-caisse 25, liant la biellette 23 à la caisse 9 ;
- une liaison rotative biellette-panneau 27, liant la biellette 23 au panneau mobile 17 ;
- au moins un guidage 29, le guidage 29 comprenant un rail 31 lié à l'un de la caisse 9 ou du panneau 17, et un chariot 33 lié par une liaison rotative 35 à l'autre de la caisse 9 ou du panneau 17, le chariot 33 étant déplaçable le long du rail 31.

Dans l'exemple représenté, la chaine cinématique 19 comprend deux biellettes 23 chacune montée par une liaison rotative biellette-caisse 25 sur la caisse, et par une liaison rotative biellette-panneau 27 sur le panneau.

Ces deux ensembles sont identiques, seul l'un deux sera décrit ci-dessous.

Quand le panneau 17 est d'un faible poids et d'une longueur longitudinale limitée, il est possible que la chaine cinématique 19 ne comporte qu'une seule biellette 23, avec une seule liaison rotative biellette-caisse 25 et une seule liaison rotative biellette-panneau 27. En variante, la chaine cinématique peut comporter plus de deux biellettes, chacune avec une liaison rotative biellette-caisse et une liaison rotative biellette-panneau.

De même, dans l'exemple représenté, la chaine cinématique 19 comprend deux guidages 29 identiques. En variante, la chaine cinématique 19 comporte un seul guidage, ou plus de trois guidages. Seul l'un de ces guidages sera décrit ci-dessous.

Comme visible sur les figures, la biellette 23 a de préférence une forme en U, avec deux branches dissymétriques.

Elle comporte une branche courte 37, dont une extrémité est liée à la caisse 9 par la liaison rotative biellette-caisse 25. Elle comporte également une branche longue 39, dont une extrémité est liée au panneau 17 par la liaison rotative biellette-panneau 27.

Les branches 37 et 39 sont sensiblement parallèles l'une à l'autre. Elles sont raccordées l'une à l'autre par une portion arquée 41.

La liaison rotative biellette-caisse 25 est une liaison pivot.

Elle est d'axe longitudinal.

La liaison 25 lie la biellette 23 directement à la caisse 9, ou lie la biellette 23 à une structure elle-même rigidement fixée à la caisse 9.

La liaison rotative biellette-panneau 27 est une liaison pivot.

Elle est d'axe longitudinal.

La liaison 27 lie la biellette 23 à une face interne 41 du panneau 17.

Dans la position d'obturation du panneau 17, la face interne 41 du panneau est tournée vers l'intérieur de la zone sous châssis 5.

Le panneau 17 est délimité par un bord supérieur 43, un bord inférieur 45, un bord avant 47 et un bord arrière 49. Des bords supérieur et inférieur sont sensiblement rectilignes, et longitudinaux. Les bords avant et arrière 47 et 49 sont parallèles l'un à l'autre. Ils sont légèrement arqués en partie inférieure. Ils raccordent l'un à l'autre les bords supérieur et inférieur 43 et 45.

La liaison rotative biellette-panneau 27 est raccordée à une zone du panneau située, suivant la direction verticale, à distance à la fois du bord supérieur 43 et du bord inférieur 45.

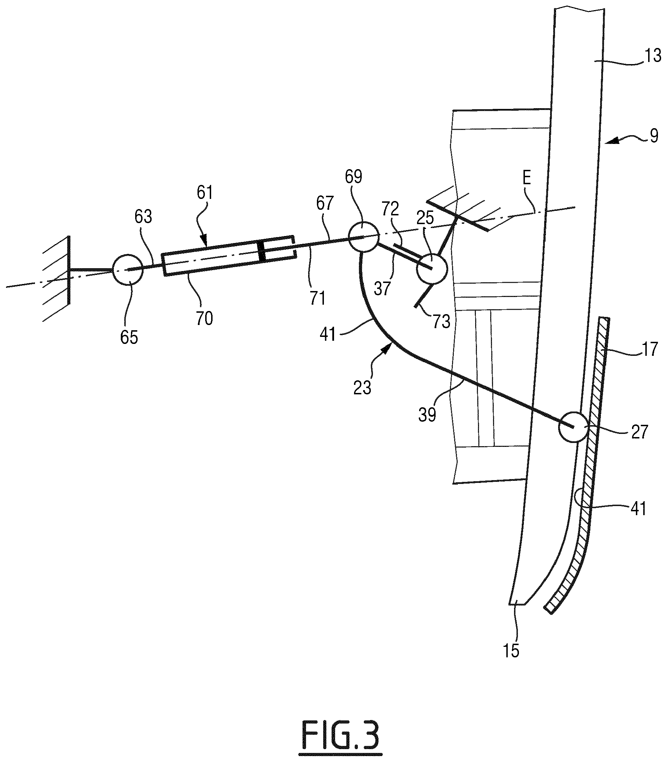

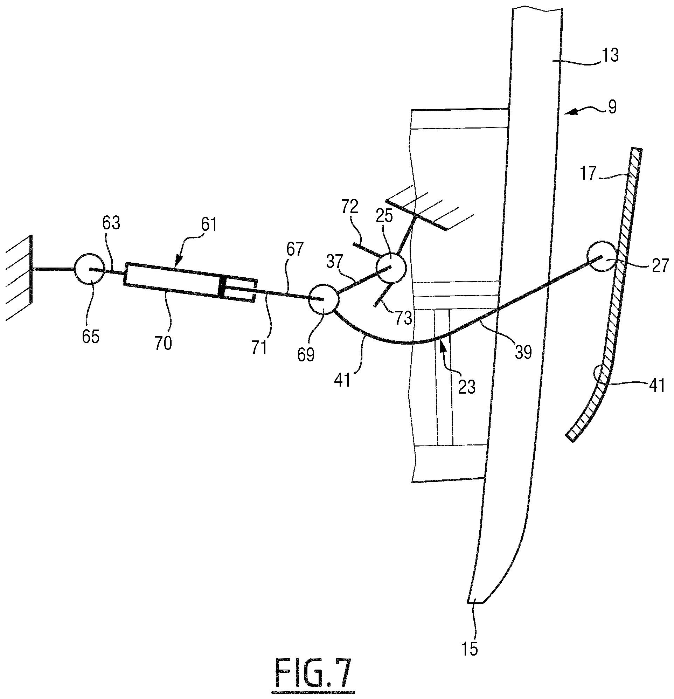

Comme illustré sur les figures 3, 5, 7 et 9, quand le panneau 17 se déplace entre sa position d'obturation et sa position de dégagement, la biellette 23 pivote autour de la liaison biellette-caisse 25, la liaison rotative biellette-panneau 27 décrivant un arc de cercle autour de la liaison 25.

De préférence, le rail 31 est lié à la caisse 9 et le chariot 33 est lié au panneau 17 par la liaison rotative chariot-panneau 35.

Le rail 31 est agencé pour guider une portion de guidage du panneau 17, lors du déplacement du panneau 17 de sa position d'obturation jusqu'à sa position de dégagement, selon une trajectoire comprenant d'abord un mouvement d'écartement par rapport à la caisse 9, puis un mouvement sensiblement parallèle à l'ouverture 11.

Le mouvement d'écartement correspond à un mouvement par lequel le panneau 17 s'écarte transversalement de la caisse 9, vers l'extérieur de la zone sous châssis 5, et se déplace verticalement vers le haut. Le mouvement sensiblement parallèle à l'ouverture 11 est essentiellement vertical vers le haut, c'est-à-dire selon une direction formant un angle inférieur à 30 degrés par rapport à la direction verticale.

La portion de guidage est située en bas du panneau 17.

La portion de guidage correspond à la portion du panneau 17 sur laquelle est monté le chariot 33 par l'intermédiaire de la liaison rotative 35.

Cette portion correspond de préférence à la partie inférieure du bord avant 47 ou du bord arrière 49 du panneau.

La liaison rotative chariot-panneau 35 est de préférence une liaison pivot.

Elle est d'axe longitudinal.

Typiquement, le rail 31 est fixé sur le bord vertical de l'ouverture 11.

Le rail 31 est d'orientation générale verticale.

Il comprend une partie inférieure 51 arquée et une partie supérieure 53 rectiligne.

À partir de l'extrémité inférieure 55 du rail 31, la partie arquée 51 s'étend transversalement vers l'extérieur de la zone sous châssis 5 et verticalement vers le haut.

Suivant la direction transversale, elle s'étend sur une largeur limitée, typiquement quelques centimètres, suffisante pour dégager le panneau 17 de l'ouverture 11, et pour l'écarter légèrement de la paroi latérale 13 de la caisse, de telle sorte que le mouvement subséquent suivant une direction verticale vers le haut se fasse sans interférence avec la paroi latérale 13.

La partie supérieure 53 du rail 31 prolonge la partie arquée 51, et s'étend sur toute la hauteur de l'ouverture 11.

Le chariot 33 comporte un support rigide 57 portant des galets 59. Les galets 59 roulent à l'intérieur du rail 31. Le support 57 est lié par la liaison rotative chariot-panneau 35 au panneau 17.

La chaine cinématique 19 comporte encore un actionneur linéaire 61, avec une extrémité proximale 63 liée à la caisse 9 par une liaison rotative actionneur-caisse 65, et une extrémité distale 67 déplaçable par rapport à l'extrémité proximale 63 suivant une direction d'extension E, l'extrémité distale 67 étant liée à la biellette 23 par une liaison rotative actionneur-biellette 69.

L'actionneur linéaire 61 est typiquement un vérin, par exemple un vérin pneumatique, ou un vérin à ressort, ou encore un vérin électrique.

Il comporte un corps 70 définissant l'extrémité proximale 63. Il comporte également une tige 71, engagée à l'intérieur du corps 70 et déplaçable par rapport au corps 70 suivant la direction d'extension E. La tige 71 définit l'extrémité distale 67.

La liaison rotative actionneur-caisse 65 est typiquement une liaison pivot.

Elle comporte un axe de rotation sensiblement longitudinal.

L'extrémité proximale 63 est liée par la liaison 65 directement à la caisse 9, ou à une autre structure elle-même fixée à la caisse.

La liaison rotative actionneur-biellette 69 est avantageusement une liaison pivot.

Elle présente un axe de rotation sensiblement longitudinal.

L'extrémité distale 67 est liée par la liaison 69 à la portion arquée 41 de la biellette 23. Plus précisément, elle est liée au point de jonction entre la branche courte 37 et la portion arquée 41.

L'actionneur linéaire 61 est configuré pour, en position d'obturation du panneau 17, solliciter la biellette 23 en rotation autour de la liaison biellette-caisse 25 dans le sens d'un maintien du panneau 17 dans sa position d'obturation.

Dans la représentation des figures, l'actionneur linéaire 61 sollicite la biellette 23 en rotation dans le sens horaire autour de la liaison 25. Ceci a pour effet de ramener le panneau 17 dans sa position d'obturation, ou de l'y maintenir.

L'actionneur linéaire 61 agit à cette fin comme un organe élastique, l'extrémité distale 67 étant sollicitée dans le sens d'un écartement par rapport à l'extrémité proximale 63 selon la direction d'extension E.

En d'autres termes, l'actionneur linéaire 61 est configuré pour, en l'absence de contrainte, s'allonger suivant la direction d'extension E.

La chaine cinématique 19 comprend une butée d'obturation 72 contre laquelle la biellette 23 vient en appui en position d'obturation du panneau 17. La biellette 23 est sollicitée contre la butée d'obturation 72 par l'actionneur linéaire 61.

En d'autres termes, la position d'obturation du panneau 17 est définie par la position de la biellette 23 en butée contre la butée d'obturation 72.

Par ailleurs, l'actionneur linéaire 61 est configuré pour, à partir d'une position intermédiaire du panneau 17 et jusqu'à la position de dégagement, solliciter la biellette 23 en rotation autour de la liaison rotative biellette-caisse 25 dans le sens d'un déplacement du panneau 17 vers sa position de dégagement.

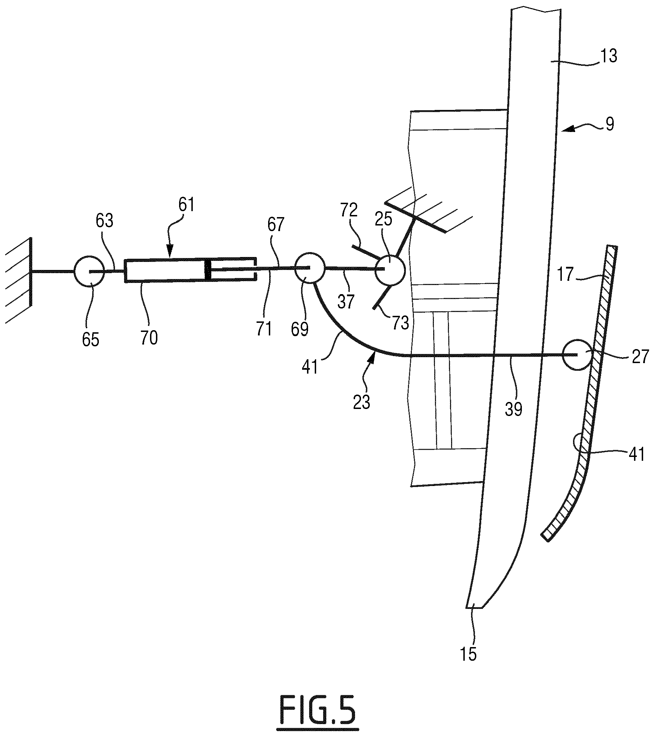

La position intermédiaire est représentée sur la figure 5.

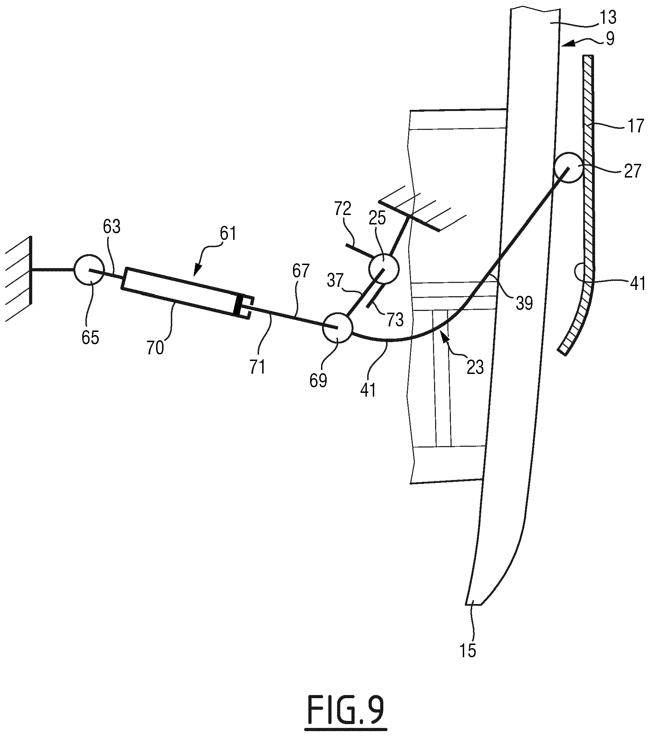

La biellette 23 occupe autour de la liaison 25 une position angulaire intermédiaire entre la position angulaire occupée en position d'obturation du panneau (figure 3), et la position angulaire occupée en position de dégagement du panneau (figure 9).

La position angulaire intermédiaire correspond à une rotation par exemple de 30 degrés de la biellette 23 à partir de la butée 72 dans le sens antihoraire dans la représentation des figures 3, 5, 7 et 9.

Dans cette position angulaire intermédiaire, la liaison actionneur-biellette 69 et la liaison biellette-caisse 25 sont alignées selon la direction d'extension E.

Dès que la biellette 23 dépasse la position angulaire intermédiaire, l'actionneur linéaire 61 sollicite en rotation la biellette 23 dans le sens antihoraire, et l'entraîne jusqu'à ce que le panneau 17 arrive en position de dégagement.

La chaine cinématique 19 comprend une butée de dégagement 73 contre laquelle la biellette 23 vient en appui en position de dégagement du panneau 17. Dans l'exemple représenté, c'est la branche 37 de la biellette qui vient en appui contre la butée 73.

Autrement dit, la position de dégagement du panneau 17 est définie par la biellette 23 venant en appui contre la butée de dégagement 73.

L'écartement angulaire entre les butées 72 et 73 autour de la liaison rotative 25 est d'environ 90 degrés dans l'exemple représenté.

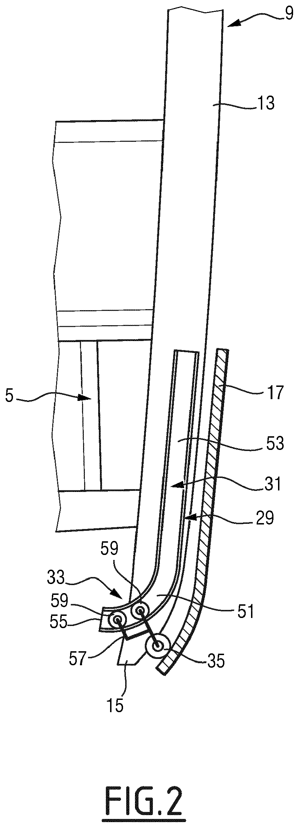

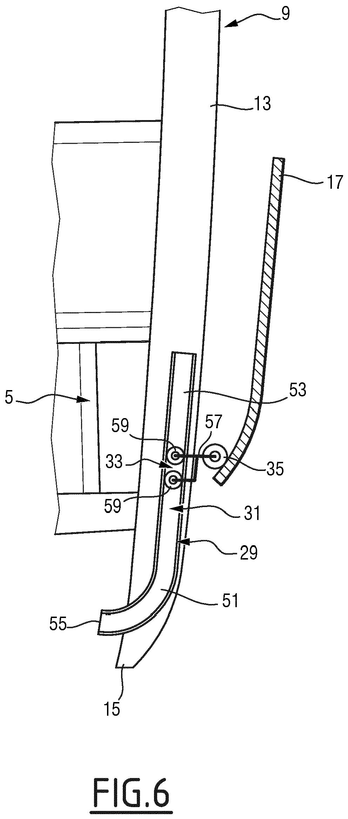

Le fonctionnement de la chaine cinématique va maintenant être décrit, en référence aux figures 2 à 9.

L'état initial est représenté sur les figures 2 et 3.

Le panneau 17 est dans sa position d'obturation de l'ouverture 11.

La biellette 23 est en appui contre la butée d'obturation 72.

L'actionneur linéaire 61 sollicite la biellette 23 en rotation autour de la liaison biellette-caisse 25 dans un sens tendant à appuyer la biellette 23 contre la butée d'obturation 72. Cette sollicitation est transmise par la biellette 23 au panneau 17, qui est sollicité dans sa position d'obturation.

Le chariot 33 est situé à l'extrémité inférieure du rail 31.

Quand un opérateur souhaite accéder à la zone sous châssis 5, il déverrouille les verrous 21, et tire le panneau 17 transversalement vers l'extérieur de la zone sous châssis. Autrement dit, il tire le panneau 17 transversalement dans un sens tendant à écarter le panneau 17 de la face latérale 13 de la caisse.

Pour ce faire, il doit vaincre la force de rappel de l'actionneur linéaire 61, qui tend à maintenir la biellette 23 en butée contre la butée d'obturation 72.

Le chariot 33 suit la partie inférieure 51 du rail 31, et se déplace transversalement vers l'extérieur de la zone sous châssis et verticalement vers le haut. La portion de guidage du panneau, sur laquelle le chariot 33 est monté par l'intermédiaire de la liaison 35, se déplace selon une trajectoire parallèle à la partie inférieure du rail. La liaison biellette-panneau 27 se déplace en arc de cercle autour de la liaison biellette-caisse 25.

Le panneau 17 est déplacé sensiblement en translation, en s'écartant de l'ouverture 11 transversalement, et en se déplaçant légèrement vers le haut.

Ceci est dû notamment au fait que la partie inférieure 51 du rail 31 forme un arc de cercle centré sur la liaison biellette-caisse 25. La liaison 35 et la liaison 27 se déplacent sur deux cercles concentriques, centrés sur la liaison 25.

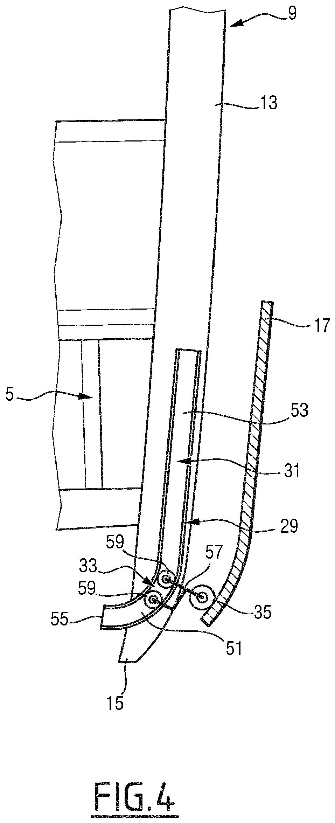

Cette partie du déplacement du panneau s'interrompt quand le panneau atteint la position intermédiaire illustrée sur les figures 4 et 5.

Une fois que le panneau 17 a dépassé la position intermédiaire, l'actionneur linéaire 61 sollicite, par l'intermédiaire de la biellette 23, le panneau 11 vers sa position de dégagement de l'ouverture.

L'opérateur n'a pratiquement plus à intervenir.

Le chariot 33 se déplace le long de la partie supérieure du rail 31. La liaison 35, et la portion de guidage du panneau, effectuent un mouvement sensiblement parallèle à l'ouverture 11, c'est-à-dire sensiblement vertical.

La liaison biellette-panneau 27 poursuit son mouvement circulaire autour de la liaison biellette-caisse 25.

Le mouvement s'interrompt quand la biellette 23 arrive en butée contre la butée de dégagement 73.

Au cours de cette partie du mouvement, le panneau a un mouvement louvoyant. La portion de guidage du panneau se déplace le long et à proximité de l'ouverture. Au contraire, la partie supérieure du panneau, située à proximité de la liaison 27, tend d'abord à s'écarter transversalement de l'ouverture, tout en montant, puis à la fin du mouvement se rapproche transversalement de la paroi latérale 13 tout en continuant à monter.

Comme visible sur la figure 9, à la fin du mouvement, le panneau 17 est sensiblement parallèle à la paroi latérale 13. Il est situé entièrement au-dessus de l'ouverture 11, de telle sorte que l'accès à la zone sous châssis 5 est facilité pour l'opérateur.

Le déplacement du panneau de sa position de dégagement à sa position d'obturation est effectué manuellement par l'opérateur, selon un mouvement exactement inverse du mouvement qui vient d'être décrit.

Dans la première partie du mouvement, de la position de dégagement à la position intermédiaire du panneau, l'opérateur doit exercer un effort pour vaincre la sollicitation appliquée par l'actionneur linéaire 61. Cet effort est modéré, car le panneau est entraîné vers le bas par son propre poids. Dans la seconde partie du mouvement, de la position intermédiaire à la position d'obturation, le panneau 17 est entrainé par l'actionneur linéaire 61, par l'intermédiaire de la biellette 23.

Le véhicule décrit ci-dessus présente de multiples avantages.

Du fait que le rail est agencé pour guider une portion de guidage du panneau, lors du déplacement du panneau de sa position d'obturation jusqu'à sa position de dégagement, selon une trajectoire comprenant d'abord un mouvement d'écartement par rapport à la caisse puis un mouvement sensiblement parallèle à l'ouverture, la trajectoire de la portion de guidage du panneau est parfaitement maitrisée.

Cette trajectoire est selon le profil du rail. La portion de guidage du panneau se déplace ainsi essentiellement parallèlement et à proximité de couverture. Ceci est particulièrement utile quand le véhicule est garé face à un obstacle tel qu'un poteau ou un arbre. La portion de guidage du panneau ne risque dans ce cas pas d'interférer avec l'obstacle, ce qui pourrait endommager le panneau et/ou l'obstacle.

Quand le rail est fixé à la caisse, le chariot étant monté sur la portion de guidage du panneau, le montage de guidage est particulièrement simple et la trajectoire de la portion de guidage est bien maitrisée.

Quand la portion de guidage est située en bas du panneau, le guidage du panneau est particulièrement précis. En effet, c'est cette partie basse du panneau qui est susceptible de s'écarter transversalement le plus de l'ouverture si la cinématique du mouvement n'est pas parfaitement maitrisée.

Quand le rail comporte une partie inférieure arquée et une partie supérieure rectiligne sensiblement parallèle à l'ouverture, la portion de guidage du panneau ne s'écarte transversalement que très peu de l'ouverture, ce qui limite les risques d'interférence avec des obstacles situés le long du véhicule.

Quand la chaine cinématique comporte un actionneur linéaire, le mouvement du panneau peut être assisté par l'actionneur linéaire, ce qui permet de faciliter l'ouverture du panneau par l'opérateur.

Quand l'actionneur linéaire est configuré pour, en position du panneau, solliciter la biellette en rotation autour de la liaison rotative biellette-caisse dans le sens d'un maintien du panneau dans sa position d'obturation, l'actionneur linéaire contribue à bloquer le panneau dans sa position d'obturation.

Quand l'actionneur linéaire est configuré pour, à partir d'une position intermédiaire du panneau et jusque dans la position de dégagement, solliciter la biellette en rotation autour de la liaison rotative biellette-caisse dans le sens d'un déplacement du panneau vers sa position de dégagement, l'actionneur linéaire assiste le mouvement du panneau. L'opérateur n'a pratiquement pas à intervenir pour déplacer le panneau de la position intermédiaire à la position de dégagement.

Le choix d'un actionneur linéaire du type vérin pneumatique, vérin à ressort ou vérin électrique est particulièrement adapté. Ces organes sont simples, peu coûteux et robustes.

Quand l'actionneur linéaire est un vérin est à ressort, le panneau peut être ouvert en tous lieux, dans et hors des dépôts ou à n'importe quel endroit sur la voie en cas de panne ou d'accident, car le véhicule ne nécessite pas d'être alimenté pour faire fonctionner des vérins à ressort.

Quand la chaine cinématique comprend des butées de dégagement et/ou d'obturation, les positions de dégagement et d'obturation du panneau sont bien définies. Les risques d'interférence du panneau avec la caisse en fin de mouvement sont réduits au minimum.

Le véhicule peut présenter de multiples variantes.

La chaine cinématique pourrait ne pas comporter d'actionneur linéaire, l'opérateur ayant alors un effort plus important à fournir pour déplacer le panneau, notamment depuis sa position d'obturation à sa position de dégagement.

Les liaisons rotatives ont été décrites comme étant des liaisons pivots. En variante, tout ou partie de ces liaisons sont des liaisons rotules, ou toute autre type de liaison adaptée.

La biellette n'a pas nécessairement une forme en U, mais peut avoir toute autre forme adaptée.

Le rail a été décrit comme ayant une partie inférieure arquée, de préférence formant un arc de cercle centré sur la liaison biellette-caisse. En variante, la partie inférieure du rail n'est pas en arc de cercle, ou ne forme pas un arc centré sur la liaison biellette-caisse. Dans ce cas, lors de la première partie du mouvement, le panneau peut pivoter légèrement autour de la liaison biellette-panneau.

Selon une variante non préférée, le rail peut être monté sur le panneau et le chariot sur la caisse. La forme du rail est alors adaptée pour obtenir la trajectoire recherchée pour le panneau. Dans ce cas, c'est la partie supérieure du rail qui est arquée et la partie inférieure qui est rectiligne. La partie supérieure a une courbure inverse de celle représentée sur les figures.

L'invention a été décrite pour une application à un véhicule ferroviaire. En variante, le véhicule est un véhicule de travaux publics tel qu'une pelle ou un bulldozer, ou encore un véhicule agricole tel qu'un tracteur ou une moissonneuse batteuse.

## Revendications

1. Véhicule comprenant un châssis (3), une zone sous châssis (5) dans laquelle sont logés des organes fonctionnels du véhicule, une caisse (9) présentant une ouverture (11) d'accès à la zone sous châssis (5), un panneau mobile (17) et une chaîne cinématique (19) agencée pour déplacer sélectivement le panneau mobile (17) par rapport à la caisse (9) entre une position d'obturation de l'ouverture (11) et une position de dégagement de l'ouverture (11), la chaîne cinématique (19) comprenant :
- une biellette (23) ;
- une liaison rotative biellette-caisse (25), liant la biellette (23) à la caisse (9) ;
- une liaison rotative biellette-panneau (27), liant la biellette (23) au panneau mobile (17) ;
- un guidage (29), le guidage (29) comprenant un rail (31) lié à l'un de la caisse (9) ou du panneau (17) et un chariot (33) lié par une liaison rotative (35) à l'autre de la caisse (9) ou du panneau (17), le chariot (33) étant déplaçable le long du rail (31).

2. Véhicule selon la revendication 1, dans lequel le rail (31) est agencé pour guider une portion de guidage du panneau (17), lors du déplacement du panneau (17) de sa position d'obturation jusqu'à sa position de dégagement, selon une trajectoire comprenant d'abord un mouvement d'écartement par rapport à la caisse (9), puis un mouvement sensiblement parallèle à l'ouverture (11).

3. Véhicule selon la revendication 2, dans lequel le rail (31) est fixé à la caisse (9), le chariot (33) étant monté sur la portion de guidage du panneau (17).

4. Véhicule selon la revendication 3, dans lequel le panneau (17) se déplace entre sa position d'obturation et sa position de dégagement selon un mouvement de direction générale verticale, la portion de guidage étant située en bas du panneau (17).

5. Véhicule selon la revendication 4, dans lequel le rail (31) est d'orientation générale verticale et comprend une partie inférieure (51) arquée et une partie supérieure (53) rectiligne sensiblement parallèle à l'ouverture (11).

6. Véhicule selon l'une quelconque des revendications précédentes, dans lequel la chaîne cinématique (19) comprend un actionneur linéaire (61), avec une extrémité proximale (63) liée à la caisse (9) par une liaison rotative actionneur-caisse (65) et une extrémité distale (67) déplaçable par rapport à l'extrémité proximale (63) selon une direction d'extension (E), l'extrémité distale (67) étant liée à la biellette (23) par une liaison rotative actionneur-biellette (69).

7. Véhicule selon la revendication 6, dans lequel l'actionneur linéaire (61) est configuré pour, en position d'obturation du panneau (17), solliciter la biellette (23) en rotation autour de la liaison rotative biellette-caisse (25) dans le sens d'un maintien du panneau (17) dans sa position d'obturation.

8. Véhicule selon la revendication 6 ou 7, dans lequel l'actionneur linéaire (61) est configuré pour, à partir d'une position intermédiaire du panneau (17) et jusqu'à la position de dégagement, solliciter la biellette (23) en rotation autour de la liaison rotative biellette-caisse (25) dans le sens d'un déplacement du panneau (17) vers sa position de dégagement.

9. Véhicule selon l'une quelconque des revendications 6 à 8, dans lequel l'actionneur linéaire (61) est un vérin pneumatique, ou un vérin à ressort ou un vérin électrique.

10. Véhicule selon l'une quelconque des revendications précédentes, dans lequel la chaîne cinématique (19) comprend une butée de dégagement (73) contre laquelle la biellette (23) vient en appui en position de dégagement du panneau (17), et de préférence comprend une butée d'obturation (72) contre laquelle la biellette (23) vient en appui en position d'obturation du panneau (17).
